(19) Europäisches Patentamt / European Patent Office / Office européen des brevets

(11) **EP 1 441 321 B1**

(12) **EUROPÄISCHE PATENTSCHRIFT**

(45) Veröffentlichungstag und Bekanntmachung des Hinweises auf die Patenterteilung:
**14.12.2011 Patentblatt 2011/50**

(51) Int Cl.:
*G08G 1/0965* (2006.01)

(21) Anmeldenummer: **03103707.0**

(22) Anmeldetag: **07.10.2003**

(54) **Verfahren zur Informationsübertragung zwischen mobilen Stationen**

Method for information transmission between mobile stations

Procédé de transmission d'information entre stations mobiles

(84) Benannte Vertragsstaaten:
**DE FR GB IT**

(30) Priorität: **21.01.2003 DE 10302053**

(43) Veröffentlichungstag der Anmeldung:
**28.07.2004 Patentblatt 2004/31**

(73) Patentinhaber: **ROBERT BOSCH GMBH**
**70442 Stuttgart (DE)**

(72) Erfinder:
• **Vollmer, Vasco**
  **31188 Holle (DE)**
• **Detlefsen, Wolfgang**
  **31141 Hildesheim (DE)**
• **Meincke, Michael**
  **31515 Wunstort (DE)**
• **Radimirsch, Markus**
  **30880 Laatzen (DE)**
• **Tondl, Peter**
  **30167 Hannover (DE)**

(56) Entgegenhaltungen:
**WO-A-03/001474    US-A1- 2002 198 653**

**Beschreibung**

Stand der Technik

Die Erfindung betrifft ein Verfahren zur Informationsübertragung zwischen mobilen Stationen, die Nachrichten aussenden und empfangen können. Eine initiierende Station sendet eine Nachricht aus und mindestens eine empfangende Station wiederholt die Nachricht, so dass die Nachricht auch von einer Station außerhalb des Sendebereichs der initiierenden Station empfangen werden kann.

Dezentral organisierte Funknetze sind seit Ende der achtziger Jahre ein intensiv bearbeitetes Forschungsgebiet. Für bestimmte Anwendungsfälle, die sich beispielsweise in der Netztopologie, den Anwendungsszenarien und/oder der Mobilität der einzelnen Stationen unterscheiden, wurden verschiedene Ansätze von Funkkommunikationsprotokollen optimiert.

Heutige Standards für Ad-hoc-Netze, wie ETSI HIPERLAN Typ 1 oder IEEE 802.11, tolerieren nur vergleichsweise geringe Relativgeschwindigkeiten der Endgeräte von weniger als 10 m/s und gestatten im Allgemeinen keine schnellen Topologieänderungen, z.B. aufgrund langer Registrierungsphasen.

Das System Ricochet baut auf einer Infrastruktur von festen Zugangsknoten entlang einer Autobahn auf, über die die Kommunikation zwischen den Fahrzeugen erfolgt. Der Anwendungsbereich ist somit auf Gebiete beschränkt, die mit einer entsprechenden festen Infrastruktur ausgestattet sind.

Parrot ist ein prototypisches System zur Fahrzeug-zu-Fahrzeug-Kommunikation, das in einem Frequenzband bei 50 MHz mit einer Sendeleistung von bis zu 60 W arbeitet. Aufgrund der niedrigen Frequenzen und der Sendeleistung können Reichweiten von bis zu 100 km und in Abhängigkeit von der Funkreichweite Datenraten von derzeit 80 kbit/s erreicht werden. Für das Routing werden Parameter der Funkkanäle gemessen und in der Pfadbestimmung mit berücksichtigt. Die Positionsdaten der Fahrzeuge werden nicht für die Optimierung der Routen ausgenutzt.

In dem Projekt WARN gibt es den Ansatz Warn-Nachrichten in einem single-hop, unicast Verfahren an den nachfolgenden Verkehr zu übermitteln. Als Warn-Nachrichten sind beispielsweise die Warnung vor einem Unfall, einem Stau oder einer Vollbremsung spezifiziert.

Stationen, die sich außerhalb der Reichweite der initiierenden Station befinden, können eine von der initiierenden Station ausgesandte Nachrichten nicht direkt empfangen, sind aber oftmals dennoch von dieser Nachricht betroffen. Im Rahmen der Fahrzeug-zu-Fahrzeug-Kommunikation tritt dieser Fall häufig auf, da die Funkreichweite eines Fahrzeugs in der Regel nicht ausreicht, um den nachfolgenden Verkehr frühzeitig vor Gefahrensituationen zu warnen. Im Rahmen eines bekannten Verfahrens zur Informationsübertragung zwischen mobilen Stationen, wird die Nachricht von mindestens einer Station in der Reichweite der initiierenden Station wiederholt, um die Informationsübertragung auch zu Stationen außerhalb der Reichweite der initiierenden Station zu gewährleisten. Im Fall der Fahrzeug-zu-Fahrzeug-Kommunikation führt diese Vorgehensweise je nach Verkehrsdichte jedoch sehr schnell zu einer Überlastung des Funkkanals.

Ein weiteres Verfahren zur Informationsübertragung ist aus der US-A-2002/0198653 bekannt.

Vorteile der Erfindung

Mit der vorliegenden Erfindung wird ein Verfahren zur Informationsübertragung zwischen mobilen Stationen der eingangs genannten Art vorgeschlagen, das eine sichere Nachrichtenübermittlung bei sehr effizienter Ausnutzung des Funkkanals ermöglicht.

Dies wird erfindungsgemäß dadurch erreicht, dass beim Senden einer Nachricht die Position der sendenden Station in die Nachricht aufgenommen wird, so dass jede empfangende Station ihren Abstand d1 zur initiierenden Station und ihren Abstand d2 zur letzten weiterleitenden Station ermitteln kann, und dass eine empfangene Nachricht erst nach einer für die empfangende Station individuell zu bestimmenden Wartezeit t wiederholt wird, wobei die Wartezeit t abhängig ist vom Abstand d1 der empfangenden Station von der initiierenden Station und vom Abstand d2 der empfangenden Station von der letzten weiterleitenden Station.

Erfindungsgemäß ist erkannt worden, dass sich sowohl der Ursprung als auch die Ausbreitungsrichtung einer Nachricht einfach ermitteln lassen, wenn beim Senden jeweils die Position der sendenden Station in die Nachricht aufgenommen wird. Dadurch wird in jedem Fall die Position der initiierenden Station in die Nachricht aufgenommen. Ist die von einer Station empfangene Nachricht einmal oder auch mehrmals wiederholt worden, umfasst sie zusätzlich auch die Position bzw. Positionen aller weiterleitenden Stationen. Die Einführung einer für jede empfangende Station individuell zu bestimmenden Wartezeit t ermöglicht eine Anpassung der Informationsübertragung an den jeweiligen Anwendungsfall. So lässt sich durch entsprechende Wahl der Wartezeiten t beispielsweise eine hohe Redundanz der Nachricht in einer definierten Umgebung der initiierenden Station erzeugen.

In einer besonders vorteilhaften Variante des erfindungsgemäßen Verfahrens können die Wartezeiten für die einzelnen empfangenden Stationen so bestimmt werden, dass die Nachricht am schnellsten bzw. bevorzugt von den Stationen mit dem größten Abstand d1 zur initiierenden Station und dem größten Abstand d2 zur letzten weiterleitenden Station wiederholt wird. Auf diese Weise können Nachrichten auch über größere Distanzen zuverlässig übertragen werden. In diesem Fall kann die Wartezeit t für eine empfangende Station beispielsweise bestimmt werden als

$$t = C \cdot [1/ (A \cdot d1 + B \cdot d2)]$$

wobei A, B und C Gewichtungsfaktoren sind.

Im Hinblick auf eine möglichst effiziente Auslastung des Funkkanals erweist es sich als vorteilhaft, wenn jede Station, die eine Nachricht empfangen hat, während der für sie bestimmten Wartezeit t prüft, ob die empfangene Nachricht bereits von einer anderen Station wiederholt wird. Wird die Nachricht noch vor Ablauf der Wartezeit t bereits von einer anderen Station erneut ausgesendet, kann die Wartezeit t abgebrochen werden und von einer Wiederholung der Nachricht durch die wartende Station abgesehen werden. Dadurch lässt sich die Anzahl der Wiederholungen verringern und eine Überlastung des Funkkanals vermeiden.

Voraussetzung für eine derartige Vorgehensweise ist die Identifizierbarkeit einer Nachricht. Dazu können im Rahmen des erfindungsgemäßen Verfahrens verschiedene Informationen genutzt werden. In der Regel lässt sich eine Nachricht einfach anhand der Position der initiierenden Station identifizieren, die ja beim erstmaligen Senden in die Nachricht aufgenommen wurde. Alternativ oder auch ergänzend dazu kann eine Nachricht auch anhand ihres Nachrichtentyps bzw. Inhalts identifiziert werden.

In einer weiteren vorteilhaften Variante des erfindungsgemäßen Verfahrens wird eine Nachricht nur dann wiederholt, wenn sie sich dadurch von der initiierenden Station entfernt, wenn sich also die letzte weiterleitende Station zwischen der aktuellen Station und der initiierenden Station befindet. Dazu prüft jede Station, die eine Nachricht empfangen hat, ob sie weiter von der initiierenden Station entfernt ist als die letzte weiterleitende Station, um die Nachricht nur in diesem Fall zu wiederholen.

Des Weiteren ist es von Vorteil, wenn die initiierende Station eine Vorzugsrichtung vorgibt, in der sich die Nachricht ausbreiten soll. Dabei kann es sich beispielsweise um die Bewegungsrichtung der initiierenden Station handeln. In diesem Fall können die empfangenden Stationen diese Richtungsinformationen bei der Entscheidung berücksichtigen, ob die Nachricht in Anbetracht der Position und Bewegungsrichtung der empfangenden Station wiederholt werden soll oder nicht.

Bei bestimmten Anwendungen kann es außerdem sinnvoll sein, die Entscheidung über eine Wiederholung auch vom Inhalt der Nachricht abhängig zu machen. In diesem Fall können Nachrichten mit hoher Dringlichkeit und Langlebigkeit über größere Distanzen übermittelt und häufiger wiederholt werden als kurzlebige Nachrichten von geringer Dringlichkeit.

In einer vorteilhaften Variante des erfindungsgemäßen Verfahrens umfassen die gesendeten Nachrichten einen Zähler, der bei jeder Wiederholung inkrementiert wird. Daran kann eine empfangende Station dann einfach erkennen, über wie viele Stationen die Nachricht bereits weitergeleitet wurde, was ebenfalls ein Entscheidungskriterium für ein erneutes Aussenden der Nachricht sein kann.

Zeichnung

Wie bereits voranstehend ausführlich erörtert, gibt es verschiedene Möglichkeiten, die Lehre der vorliegenden Erfindung in vorteilhafter Weise auszugestalten und weiterzubilden. Dazu wird einerseits auf die dem Patentanspruch 1 nachgeordneten Patentansprüche und andererseits auf die nachfolgende Beschreibung der Informationsübertragung zwischen Fahrzeugen als Anwendungsbeispiel für das erfindungsgemäße Verfahren verwiesen.

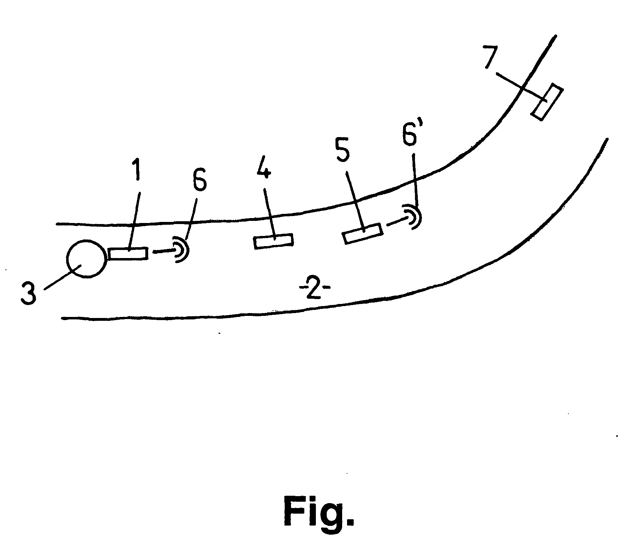

Die einzige Figur zeigt die schematische Darstellung einer Verkehrssituation.

Beschreibung des Ausführungsbeispiels

Im hier dargestellten Ausführungsbeispiel trifft ein erstes Fahrzeug 1 auf einer kurvigen Straße 2 auf ein Hindernis 3 auf. Nachdem der Airbag ausgelöst wurde sendet das Fahrzeug 1 eine entsprechende Warnmeldung zusammen mit Angaben über seine Position aus. Das Fahrzeug 1 fungiert hier also als initiierende Station für die Warnmeldung.

Die nachfolgenden Fahrzeuge 4 und 5 empfangen nun eine Nachricht 6, die sich aus der Warnmeldung und den Positionsangaben des Fahrzeugs 1 zusammensetzt. Ein Fahrzeug 7, das sich außerhalb des Sendebereichs von Fahrzeug 1 befindet, kann die Nachricht 6 nicht empfangen, ist aber dennoch von der Warnmeldung betroffen. Deshalb soll die Nachricht 6 von mindestens einer empfangenden Station wiederholt werden, deren Sendereichweite auch Fahrzeug 7 erfasst.

Erfindungsgemäß berechnen alle empfangenden Stationen, nämlich die Fahrzeuge 4 und 5, jeweils ihren Abstand d1 zur initiierenden Station 1 anhand der in der Nachricht 6 enthaltenen Positionsangaben und bestimmen dann unter Zugrundelegung dieses Abstands d1 eine individuelle Wartezeit t bis zum Wiederholen der Nachricht 6. Zum Einhalten der individuellen Wartezeiten t startet jede empfangende Station 4 und 5 einen Zeitzähler. Bei dem hier in Rede stehenden Ausführungsbeispiel wird die Wartezeit t bestimmt als

$$t = C \cdot [1/ (A \cdot d1 + B \cdot d2)]$$

wobei d2 der Abstand der empfangenden Station von der letzten weiterleitenden Station ist. Da die Fahrzeuge 4 und 5 die Nachricht 6 direkt von der initiierenden Station 1 empfangen haben, es also keine letzte weiterleitende Station gibt, ist d2 hier Null. Bei A, B und C handelt es sich um Gewichtungsfaktoren.

Da der Abstand zwischen Fahrzeug 1 und Fahrzeug 5 größer ist als der Abstand zwischen Fahrzeug 1 und Fahrzeug 4, wiederholt zunächst Fahrzeug 5 die Nachricht 6 und fügt dabei die eigenen Positionsdaten hinzu. Außerdem wird die Nachricht 6 mit Hilfe eines Hop-Zählers inkrementiert, damit ein Empfänger erkennen kann, über wie viele Stationen die Warnmeldung bereits weitergeleitet wurde. Die dabei entstehende Nachricht 6' wird sowohl von Fahrzeug 4 als auch von Fahrzeug 7 empfangen, da sich beide Fahrzeuge 4 und 7 im Sendebereich von Fahrzeug 5 befinden.

Fahrzeug 4 prüft nun, ob die empfangene Nachricht 6' dieselbe Warnmeldung enthält wie die Nachricht 6, die den noch laufenden Zeitzähler ausgelöst hat. Die Warnmeldung kann beispielsweise anhand der Position der initiierenden Station 1 identifiziert werden, die ja sowohl in der Nachricht 6 als auch in der Nachricht 6' enthalten ist. Eine Warnmeldung kann aber auch anhand ihres Inhalts bzw. des Nachrichtentyps identifiziert werden. Nachdem Fahrzeug 4 erkannt hat, dass die empfangene Nachricht 6' dieselbe Warnmeldung umfasst wie die Nachricht 6, die den Zeitzähler ausgelöst hat, wird der Zeitzähler gestoppt und von einer Wiederholung der Nachricht 6 abgesehen.

Nach Empfang der Nachricht 6' bestimmt Fahrzeug 7 zunächst seinen Abstand d1 zur initiierenden Station 1 und seinen Abstand d2 zur letzten weiterleitenden Station, d.h. Fahrzeug 5. Auf der Basis dieser Abstände d1 und d2 wird die individuelle Wartezeit t bis zum Wiederholen der Nachricht 6' bestimmt. Außerdem prüft Fahrzeug 7, ob es weiter von der initiierenden Station 1 entfernt ist als die letzte weiterleitende Station 5. Da dies im hier beschriebenen Ausführungsbeispiel der Fall ist, wird ein Zeitzähler gestartet, nach dessen Ablauf die Nachricht 6' erneut ausgesandt werden kann.

Mit Hilfe der voranstehend beschriebenen Vorgehensweise kann eine Warnmeldung mit einer geringen Anzahl an Wiederholungen, d.h. bei effizienter Ausnutzung des Funkkanals, über große Distanzen übertragen werden.

Auch die Ausbreitungsrichtung der Übertragung kann mit Hilfe des erfindungsgemäßen Verfahrens beeinflusst werden. Dazu kann die initiierende Station zusammen mit der eigentlichen Nachricht eine Vorzugsrichtung für die Nachrichtenübertragung aussenden, so dass die empfangenden Stationen diese Vorzugsrichtung bei der Entscheidung über das erneute Aussenden der Nachricht berücksichtigen können. Außerdem ist es oftmals sinnvoll, auch den Inhalt einer Nachricht zu berücksichtigen. So sollten Nachrichten mit hoher Dringlichkeit und Langlebigkeit, wie z.B. eine Unfallmeldung, über eine größere Distanz übertragen werden, als Nachrichten mit geringerer Wichtigkeit, wie z.B. das Signalisieren eines Bremsvorgangs.

**Patentansprüche**

1. Verfahren zur Informationsübertragung zwischen mobilen Stationen, die Nachrichten aussenden und empfangen können,

> bei dem eine initiierende Station (1) eine Nachricht (6) aussendet und mindestens eine empfangende Station (4, 5) die Nachricht (6) wiederholt, so dass die Nachricht (6) auch von einer Station (7) außerhalb des Sendebereichs der initiierenden Station (1) empfangen werden kann, wobei

beim Senden einer Nachricht (6) die Position der sendenden Station (1; 4, 5) in die Nachricht (6) aufgenommen wird, so dass jede empfangende Station (4, 5; 7) ihren Abstand d1 zur initiierenden Station (1) und ihren Abstand d2 zur letzten weiterleitenden Station (5) ermitteln kann, **dadurch gekennzeichnet, dass** eine empfangene Nachricht (6) erst nach einer für die empfangende Station (4, 5; 7) individuell zu bestimmenden Wartezeit t wiederholt wird, wobei die Wartezeit t abhängig ist vom Abstand d1 der empfangenden Station (4, 5; 7) von der initiierenden Station (1) und vom Abstand d2 der empfangenden Station (7) von der letzten weiterleitenden Station (5).

2. Verfahren nach Anspruch 1, **dadurch gekennzeichnet, dass** die Wartezeit t für eine empfangende Station (4, 5; 7) bestimmt wird als

$$t = C \bullet [1/ (A \bullet d1 + B \bullet d2)]$$

wobei A, B und C Gewichtungsfaktoren sind.

3. Verfahren nach einem der Ansprüche 1 oder 2, **dadurch gekennzeichnet, dass** jede Station (4), die eine Nachricht (6) empfangen hat, während der für sie bestimmten Wartezeit t prüft, ob die empfangene Nachricht (6) bereits von einer anderen Station (5) wiederholt wird, und dass die empfangene Nachricht (6) in diesem Fall nicht wiederholt wird.

4. Verfahren nach Anspruch 3, **dadurch gekennzeichnet, dass** die Nachrichten anhand der Position der initiierenden Station identifiziert wird.

5. Verfahrne nach einem der Ansprüche 3 oder 4, **dadurch gekennzeichnet, dass** die Nachrichten anhand ihres Nachrichtentyps identifiziert werden.

6. Verfahren nach einem der Ansprüche 1 bis 5, **dadurch gekennzeichnet, dass** jede Station (7), die eine Nachricht (6) empfangen hat, prüft, ob sie weiter von der initiierenden Station (1) entfernt ist als die letzte weiterleitende Station (5), und dass die Nachricht (6) nur in diesem Fall wiederholt wird.

**7.** Verfahren nach einem der Ansprüche 1 bis 6, **dadurch gekennzeichnet, dass** die initiierende Station die zu sendende Nachricht durch Informationen über eine Vorzugsrichtung ergänzt und dass jede empfangende Stationen bei der Entscheidung über das erneute Aussenden der Nachricht diese Richtungsinformationen berücksichtigt.

**8.** Verfahren nach einem der Ansprüche 1 bis 7, **dadurch gekennzeichnet, dass** jede empfangende Station bei der Entscheidung über das erneute Aussenden der Nachricht den Inhalt der Nachricht bzw. den Nachrichtentyp berücksichtigt.

**9.** Verfahren nach einem der Ansprüche 1 bis 8, **dadurch gekennzeichnet, dass** die Nachricht (6) bei jeder Wiederholung inkrementiert wird.

**10.** Verwendung eines Verfahrens nach einem der Ansprüche 1 bis 9 im Rahmen eines Fahrzeug-zu-Fahrzeug-Kommunikationssystems, insbesondere zum Aussenden und Übertragen von Wammeldungen.

**Claims**

**1.** Method for the transmission of information between mobile stations which are able to send and receive messages,

in which an initiating station (1) sends a message (6) and at least one receiving station (4, 5) repeats the message (6), so that the message (6) can also be received by a station (7) outside the transmission range of the initiating station (1), wherein

the sending of a message (6) involves the position of the sending station (1; 4, 5) being included in the message (6), so that each receiving station (4, 5; 7) can ascertain its distance d1 from the initiating station (1) and its distance d2 from the last forwarding station (5),
**characterized in that** a received message (6) is repeated only after a waiting time t which needs to be determined individually for the receiving station (4, 5; 7), wherein the waiting time t is dependent on the distance d1 between the receiving station (4, 5; 7) and the initiating station (1) and on the distance d2 between the receiving station (7) and the last forwarding station (5).

**2.** Method according to Claim 1, **characterized in that** the waiting time t for a receiving station (4, 5; 7) is determined as

$$t = C \bullet [1/(A \bullet d1 + B \bullet d2)],$$

where A, B and C are weighting factors.

**3.** Method according to one of Claims 1 and 2, **characterized in that** each station (4) which has received a message (6) checks, during the waiting time t which has been determined for it, whether the received message (6) is already being repeated by another station (5), and **in that** the received message (6) is not repeated in this case.

**4.** Method according to Claim 3, **characterized in that** the messages are identified from the position of the initiating station.

**5.** Method according to one of Claims 3 and 4, **characterized in that** the messages are identified from their message type.

**6.** Method according to one of Claims 1 to 5, **characterized in that** each station (7) which has received a message (6) checks whether it is further away from the initiating station (1) than the last forwarding station (5), and **in that** the message (6) is repeated only in this case.

**7.** Method according to one of Claims 1 to 6, **characterized in that** the initiating station complements the message to be sent with information about a preferential direction and **in that** each receiving station takes this direction information into account for the decision about the fresh sending of the message.

**8.** Method according to one of Claims 1 to 7, **characterized in that** each receiving station takes the content of the message or the message type into account for the decision about the fresh sending of the message.

**9.** Method according to one of Claims 1 to 8, **characterized in that** the message (6) is incremented for each repetition.

**10.** Use of a method according to one of Claims 1 to 9 as part of a vehicle-to-vehicle communication system, particularly for sending and transmitting warning signals.

**Revendications**

**1.** Procédé de transfert d'informations entre des postes mobiles qui peuvent émettre et recevoir des messages, et dans lequel :

un poste initiateur (1) émet un message (6) et un ou plusieurs postes récepteurs (4, 5) répètent le message (6) de telle sorte que le message (6) puisse être également reçu par un poste (7) situé hors de la portée d'émission du poste initiateur (1) et dans lequel :

lors de l'émission d'un message (6), la position du poste émetteur (1; 4, 5) est enregistrée dans le message (6) de telle sorte que chaque poste récepteur (4, 5; 7) puisse déterminer sa distance d1 par rapport au poste initiateur (1) et sa distance d2 par rapport au dernier poste retransmetteur (5), **caractérisé en ce qu'**un message (6) reçu n'est répété qu'après un temps d'attente t déterminé individuellement pour chaque poste récepteur (4, 5; 7), le temps d'attente t dépendant de la distance d1 entre le poste récepteur (4, 5; 7) et le poste initiateur (1) et de la distance d2 entre le poste récepteur (7) et le dernier poste retransmetteur (5).

2. Procédé selon la revendication 1, **caractérisé en ce que** le temps d'attente t pour un poste récepteur (4, 5; 7) est déterminé par :

$$t = C.[1/(A.d1 + B.d2)]$$

dans laquelle A, B et C sont des facteurs de pondération.

3. Procédé selon l'une des revendications 1 ou 2, **caractérisé en ce que** chaque poste (4) qui a reçu un message (6) vérifie pendant le temps d'attente t déterminé pour lui si le message reçu (6) est déjà répété par un autre poste (5) et **en ce que** dans l'affirmative, le message (6) reçu n'est pas répété.

4. Procédé selon la revendication 3, **caractérisé en ce que** les messages sont identifiés par la position du poste initiateur.

5. Procédé selon l'une des revendications 3 ou 4, **caractérisé en ce que** les messages sont identifiés à l'aide de leur type de message.

6. Procédé selon l'une des revendications 1 à 5, **caractérisé en ce que** chaque poste (7) qui a reçu un message (6) vérifie s'il est plus éloigné du poste initiateur (1) que le dernier poste retransmetteur (5) et **en ce que** le message (6) n'est répété que dans l'affirmative.

7. Procédé selon l'une des revendications 1 à 6, **ca-**

**ractérisé en ce que** le poste initiateur complète le message à envoyer par des informations concernant une direction préférentielle et **en ce que** chaque poste récepteur tient compte de cette information de direction lorsqu'il décide d'une nouvelle émission du message.

8. Procédé selon l'une des revendications 1 à 7, **caractérisé en ce que** chaque poste récepteur tient compte du contenu du message ou du type de message lorsqu'il décide d'une nouvelle émission du message.

9. Procédé selon l'une des revendications 1 à 8, **caractérisé en ce que** le message (6) est incrémenté lors de chaque répétition.

10. Utilisation d'un procédé selon l'une des revendications 1 à 9 dans le cadre d'un système de communication de véhicule à véhicule, en particulier pour émettre et transmettre des messages d'avertissement.

**Fig.**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20020198653 A